# EUROPEAN PATENT APPLICATION

(11) **EP 4 495 808 A1**
(43) Date of publication of application: **22.01.2025**
(21) Application number: 23791015.3
(22) Date of filing: 31.03.2023
(51) Int. Cl.: G06F 16/957, H04N 21/2187

(54) **LIVE-STREAMING CONTENT DISPLAY METHOD AND APPARATUS, AND DEVICE, READABLE STORAGE MEDIUM AND PRODUCT**

(30) Priority: 18.04.2022 CN 202210407086
(71) Applicant: Beijing Zitiao Network Technology Co., Ltd., Beijing 100190 (CN)
(72) Inventor: CAO, Anping, Beijing 100028 (CN); WU, Di, Beijing 100028 (CN); HAN, Jiadong, Beijing 100028 (CN); SUN, Jiong, Beijing 100028 (CN); ZHANG, Qi, Beijing 100028 (CN)
(74) Representative: Dentons UK and Middle East LLP
(86) International application number: PCT/CN2023/085749
(87) International publication number: WO 2023/202359

(57) **Abstract**

Embodiments of the present disclosure provide a method for displaying live streaming content, an apparatus for displaying live streaming content, an electronic device, a computer readable storage medium, a computer program product and a computer program. The method comprises: displaying a live streaming content preview interface; in response to a page jump request, jumping to a live session interface, and displaying live streaming content in a first display region of the live session interface, and displaying, in a second display region of the live session interface, information associated with a plurality of first target objects associated with the live streaming content.

## Description

### CROSS REFERENCE OF RELATED APPLICATION(S)

The present application claims priority of a Chinese invention patent application with application number CN202210407086.4, filed on April 18, 2022, entitled "METHOD, APPARATUS, DEVICE, READABLE STORAGE MEDIUM AND PRODUCT FOR DISPLAYING LIVE STREAMING CONTENT", which is incorporated herein by reference in its entirety.

### FIELD

Embodiments of the present disclosure relate to a field of computer and network communication technologies, and in particular, to a method for displaying live streaming content, an apparatus for displaying live streaming content, an electronic device, a computer readable storage medium, a computer program product, and a computer program.

### BACKGROUND

A smart television is a new television product having a fully open platform and an operating system. A user can install and uninstall various types of application software on his own initiative while enjoying common television content, so as to continuously extend and upgrade functions of the smart television.

### SUMMARY

Embodiments of the present disclosure provide a method for displaying live streaming content, an apparatus for displaying live streaming content, an electronic device, a computer readable storage medium, a computer program product and a computer program.

According to a first aspect, an embodiment of the present disclosure provides a method for displaying live streaming content, including: displaying a live streaming content preview interface; in response to a page jump request, jumping to a live session interface; and displaying live streaming content in a first display region of the live session interface, and displaying, in a second display region of the live session interface, information associated with a plurality of first target objects associated with the live streaming content.

In a possible design, in response to a predetermined operation of the user in the live streaming content preview interface, jumping to the live session interface comprises: in response to a user triggering resource description information corresponding to any of the plurality of first target objects within a predetermined first time period, jumping to the live session interface.

In a possible design, after displaying, in a second preview region of the live streaming content preview interface, resource description information corresponding to any of the plurality of first target objects associated with the live streaming content, the method further includes: in response to a user triggering resource description information corresponding to any of the plurality of first target objects within a predetermined first time period, jumping to a presentation interface of the resource description information.

In a possible design, after displaying, in a second preview region of the live streaming content preview interface, resource description information corresponding to any of the plurality of first target objects associated with the live streaming content, the method further includes: in response to a user triggering resource description information corresponding to any of the plurality of first target objects within a predetermined first time period, displaying an option list in the second preview region, wherein the option list comprises jumping to the live session interface and jumping to a presentation interface of the resource description information; and performing an interface jumping based on a selection operation of the user in the option list.

In a possible design, before in response to a predetermined operation of the user on the live streaming content preview interface, jumping to the live session interface, the method further comprises: in response to a user switching media content currently played on a media content play interface, displaying the live streaming content preview interface.

In a possible design, before in response to a predetermined operation of the user on the live streaming content preview interface, jumping to the live session interface, the method further comprises: in response to the user searching any of the plurality of first target objects in a search interface, displaying a search result page, wherein the search result page comprises a live streaming content search result associated with the any of the plurality of first target objects; and in response to the user triggering the live streaming content search result, displaying the live streaming content preview interface.

In a possible design, the triggering operation is initiated by the user through a remote control terminal, and/or the triggering operation is initiated by the user through a predetermined gesture.

In a possible design, after displaying, in the second display region of the live session interface, the information associated with the plurality of first target objects associated with the live streaming content, the method further includes: in response to the user switching the information associated with the plurality of first target objects, updating information associated with the plurality of first target objects that is currently displayed in the second display region.

According to a second aspect, an embodiment of the present disclosure provides an apparatus for displaying live streaming content, including: a display module configured for displaying a live streaming content preview interface; a jumping module configured for: in response to a page jump request, jumping to a live session interface; and a processing module configured for displaying live streaming content in a first display region of the live session interface, and displaying, in a second display region of the live session interface, information associated with a plurality of first target objects that are associated with the live streaming content.

According to a third aspect, an embodiment of the present disclosure provides an electronic device comprising a processor and a memory. The memory stores computer executable instructions, and the processor executes the computer executable instructions stored in the memory, so that at least one processor executes a method for displaying live streaming content in accordance with the first aspect and various possible designs of the first aspect.

According to a fourth aspect, an embodiment of the present disclosure provides a computer readable storage medium with computer executable instructions stored thereon. The computer executable instructions, when being executed by a processor, implement a method for displaying live streaming content in accordance with the first aspect and various possible designs of the first aspect.

According to a fifth aspect, an embodiment of the present disclosure provides a computer program product comprising a computer program. The computer program, when being executed by a processor, implements a method for displaying live streaming content in accordance with the first aspect and various possible designs of the first aspect.

According to a sixth aspect, an embodiment of the present disclosure provides a computer program. The computer program, when being executed by a processor, implements a method for displaying live streaming content in accordance with the first aspect and various possible designs of the first aspect.

### BRIEF DESCRIPTION OF THE DRAWINGS

In order to provide a clearer explanation of the technical solutions of embodiments of the present disclosure or related technologies, a brief introduction will be given below to the accompanying drawings used for describing the embodiments or related technologies. It is obvious that the accompanying drawings in the following description are merely some embodiments of the present disclosure. For those skilled in the art, other accompanying drawings can be obtained based on these accompanying drawings without any creative work.
FIG. 1 is a schematic flowchart of a method for displaying live streaming content according to an embodiment of the present disclosure;
FIG. 2 is a schematic diagram of interface interaction according to an embodiment of the present disclosure;
FIG. 3 is a schematic diagram of a display interface according to an embodiment of the present disclosure;
FIG. 4 is a schematic diagram of further interface interaction according to an embodiment of the present disclosure;
FIG. 5 is a schematic diagram of further interface interaction according to an embodiment of the present disclosure;
FIG. 6 is a schematic diagram of further interface interaction according to an embodiment of the present disclosure;
FIG. 7 is a schematic diagram of a further display interface according to an embodiment of the present disclosure;
FIG. 8 is a schematic diagram of a further display interface according to an embodiment of the present disclosure;
FIG. 9 is a schematic diagram of further interface interaction according to an embodiment of the present disclosure;
FIG. 10 is a schematic diagram of further interface interaction according to an embodiment of the present disclosure;
FIG. 11 is a schematic structural diagram of a live streaming content display apparatus according to an embodiment of the present disclosure; and
FIG. 12 is a schematic structural diagram of an electronic device according to an embodiment of the present disclosure.

### DETAILED DESCRIPTION

In order to make purposes, technical solutions and advantages of the embodiments of the present disclosure more apparent, the technical solutions in the embodiments of the present disclosure will be described below in a clearly and fully understandable way in combination with the drawings related to the embodiments of the present disclosure. It is obvious that the described embodiments are only a part but not all of the embodiments of the present disclosure. All other embodiments obtained by a person of ordinary skill in the art based on the embodiments of the present disclosure without creative efforts shall belong to the scope of protection of the present disclosure.

Currently, a large amount of application software launches versions that are applied to mobile terminals and versions that are applied to television terminals, separately. However, a smart television is generally controlled by a control terminal such as a remote controller, and there is a difference between a television terminal and a mobile terminal in terms of application scenarios. Therefore, directly reusing a display interface(s) in a mobile terminal version on a smart television version may result in that a user cannot quickly and accurately use an application software function, and thus leads to a poor user experience. However, in the related art, the interactive mode in an e-commerce scenario at the TV side is relatively simple, which results in a poor user experience.

In view of the described technical problem that a live streaming content display method in the related art cannot enable a user to quickly and accurately use functions of the application software, the present disclosure provides a method for displaying live streaming content, an apparatus for displaying live streaming content, an electronic device, a computer readable storage medium, a computer program product and a computer program.

It should be noted that the method for displaying live streaming content, the device for displaying live streaming content, the electronic device, the computer readable storage medium, the computer program product and the computer program provided in the present disclosure may be applied in various scenarios for displaying live streaming content.

In the related art, the interactive mode in an e-commerce scenario at the TV side is relatively simple, which results in poor user experience. In addition, since the television terminal is different from the mobile phone terminal, the display interface of the mobile phone terminal cannot be directly reused on the television terminal.

In the process of solving the described technical problem, through research, the inventor(s) found that: content (such as, a list of first target objects, resource description information, or the like) that is displayed over a live streaming content can be displayed in a further display region(s) which is at least partially non-overlapped with a display region of the live streaming content; thereby, it is convenient for the user to use the control terminal to view target information associated with the live streaming content currently displayed in the live session interface, and the user experience can be improved.

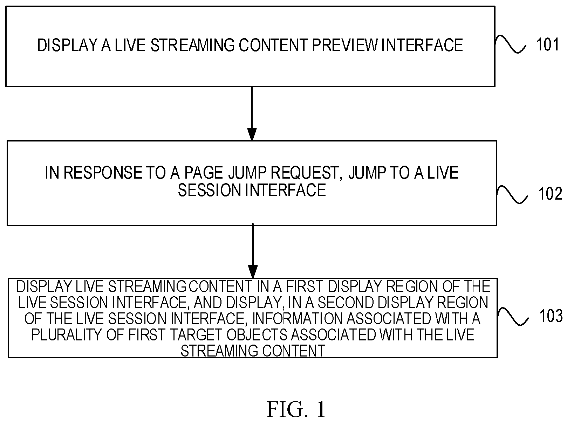

FIG. 1 is a schematic flowchart of a method for displaying live streaming content according to an embodiment of the present disclosure. As shown in FIG. 1, the method includes:
Step 101: display a live streaming content preview interface.

An actor of this embodiment is a live streaming content display apparatus. The live streaming content display apparatus may be coupled to a smart display device of a non-mobile terminal (such as a television terminal) and may also be coupled to a mobile terminal device, so that a trigger operation initiated by a user can be acquired, and the live streaming content is displayed based on the trigger operation. When the live streaming content display apparatus is coupled to a smart display device of a non-mobile terminal, any trigger operation described in this embodiment may be input by a user through a control terminal or a gesture.

Alternatively, the live streaming content display apparatus may also be coupled to a server, and the server may be communicatively connected with a non-mobile smart display device or a mobile terminal device, so as to acquire a trigger operation of a user received by the non-mobile smart display device or the mobile terminal device, and the live streaming content is displayed based on the trigger operation.

In this embodiment, in order to implement the operation of displaying live streaming content, a live streaming content preview interface may be displayed on a display interface at first, and a user may initially understand live streaming content through the live streaming content preview interface.

Step 102: in response to a page jump request, jump to a live session interface.

In this embodiment, when the live streaming content preview interface is displayed, a page jump request triggered by the user may be obtained. The page jump request may be a request initiated in response to a predetermined operation of the user on the live streaming content preview interface. Alternatively, the page jump request may be a request initiated in response to the live streaming content preview interface not receiving any trigger operation for a predetermined duration. Alternatively, the page jump request may be a request initiated by the user through any control manner such as the control terminal. The present disclosure is not limited in this respect. The live streaming content preview interface may display preview content of the live streaming content. The preview content may be a specific segment(s) of part of live streaming content, or real-time live streaming content, etc.

If a page jump request initiated by the user is detected, it may jump to the live session interface in response to the page jump request. The live streaming content may be played within the live session interface.

A non-mobile smart display device may be any type of smart display device that is controllable by a control terminal or gestures, such as a smart television, a smart projector, or the like. A mobile terminal device may be any type of display device that is capable of displaying the live streaming content, such as a mobile phone or tablet.

Step 103: display live streaming content in a first display region of the live session interface, and display, in a second display region of the live session interface, information associated with a plurality of first target objects associated with the live streaming content.

By displaying live streaming content in a first display region and displaying information associated with a plurality of first target objects associated with the live streaming content in a second display region, a user can conveniently select the information associated with any one of the plurality of first target objects. Thereby, the convenience of the user in triggering content of interest in a live session interface can be improved, and the use experience of the user can be enhanced.

Alternatively, the live session interface and the live streaming content preview interface are presentation interfaces in a landscape orientation. The live session interface includes a first display region and a second display region. The second display region may be in the first region, and may also be outside the first region. Specifically, live streaming content may be displayed in a first display region of a live session interface, and information associated with a plurality of first target objects that are associated with the live streaming content is displayed in a second display region of the live session interface, wherein the association information may be an identifier, a preview image, resource description information, etc. corresponding to a first target object(s).

Alternatively, at least portions of the first display region and the second display region may be controlled to be non-overlapped, so that a user can more conveniently select, through a remote control terminal or a gesture, associated information of a plurality of first target objects that is displayed in the second display region.

Alternatively, the second display region may cover the first display region. Since information associated with a plurality of first target objects associated with live streaming content is displayed in the second display region, even if the second display region covers the first display region, a user can still quickly and accurately trigger any of the plurality of first target objects on demand.

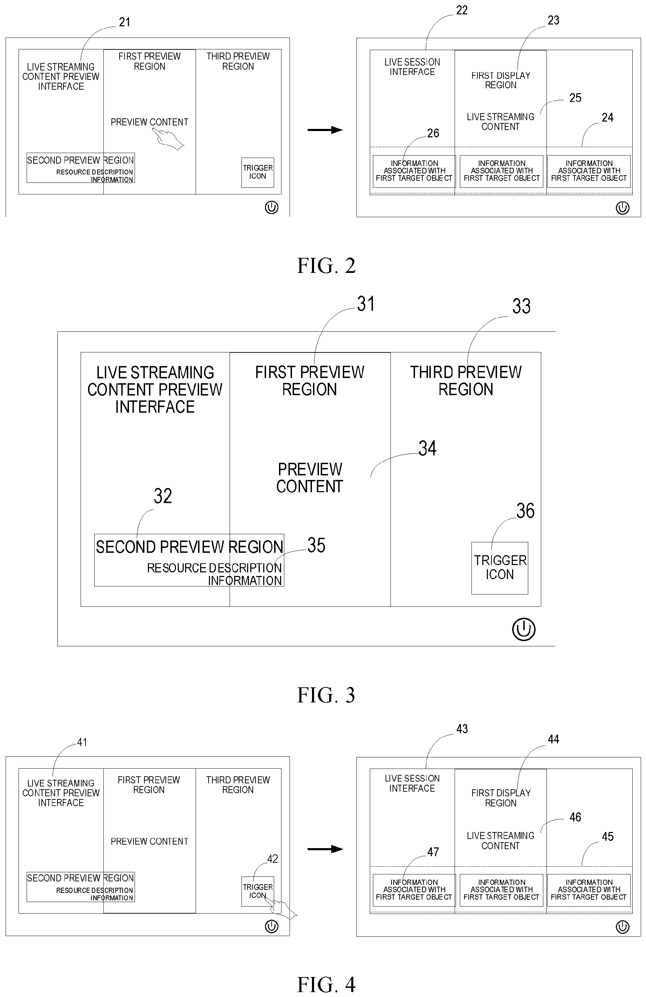

FIG. 2 is a schematic diagram of interface interaction according to an embodiment of the present disclosure. As shown in FIG. 2, when a live streaming content preview interface 21 is currently displayed in a display interface, a predetermined operation of a user within the live streaming content preview interface 21 may be acquired. In response to the predetermined operation, it may jump to the live session interface 22. The live session interface 22 specifically comprises a first display region 23 and a second display region 24. Live streaming content 25 is displayed in the first display region 23, information 26 associated with a plurality of first target objects associated with the live streaming content is displayed in the second display region 24, and the information associated with the first target objects may specifically be an information card of merchandise. The first display region 23 may be located at a middle position of the live session interface 22, and the second display region 24 may be located at a lower side of the live session interface 22.

The present disclosure can facilitate a selection operation of a user for information associated with a plurality of first target objects. Thereby, the convenience of the user in triggering content of interest in a live session interface can be improved, and the use experience of the user can be enhanced.

Furthermore, on the basis of the embodiment, before Step 101, the method further includes: displaying preview content of the live streaming content in a first preview region of the live streaming content preview interface; displaying, in a second preview region of the live streaming content preview interface, resource description information corresponding to a second target object associated with the live streaming content; and displaying a predetermined trigger icon in a third preview region of the live streaming content preview interface.

In this embodiment, the live streaming content preview interface may specifically include a first preview region, a second preview region, and a third preview region. When a display interface of a terminal device currently displays a live streaming content preview interface, a preview content of the live streaming content may be displayed in a first preview region of the live streaming content preview interface. The preview content may specifically be a segment(s) of part of the live streaming content, or may be real-time live streaming content, etc. The resource description information corresponding to the second target object associated with the live streaming content is displayed in the second preview region of the live streaming content preview interface. Taking the live streaming content being live streaming content of merchandise as an example, the first target object may be merchandise corresponding to the live streaming content. Specifically, the merchandise may be a merchandise currently being talked about in the live session. Alternatively, the first target object may be a part of merchandise in a merchandise list corresponding to the live session, for example, merchandise that meets a predetermined condition, or all of merchandise in the merchandise list corresponding to the live session, for example, merchandise with the highest sales. The resource description information includes but is not limited to content such as discount information and/or coupon information of merchandise. The second target object may specifically be any one of the plurality of first target objects. By displaying the resource description information in the live streaming content preview interface, the user can view the live streaming content on demand when viewing the resource description information. A predetermined trigger icon is displayed in a third preview region of the live streaming content preview interface. The trigger icon is configured to: in response to the user triggering the trigger icon, jump to the live session interface, so as to realize the viewing of live streaming content.

It should be noted that the first preview region, the second preview region, and the third preview region may be at least partially non-overlapped, so that the user may select and trigger the preview content in respective preview region in a manner such as a remote control terminal or a gesture. For example, when the display size of the first preview region is less than the display interface size of the terminal device, the first preview region, the second preview region, and the third preview region may be at least partially non-overlapped.

Optionally, when the display size of the first previewing region is the same as a size of the display interface of the terminal device, that is, when the preview content of the live streaming content is displayed in full screen, the second previewing region and the third previewing region may overlap with the first previewing region.

The present disclosure does not limit the display sizes and display positions of the first preview region, the second preview region, and the third preview region.

FIG. 3 is a schematic diagram of a display interface according to an embodiment of the present disclosure. As shown in FIG. 3, the live streaming content preview interface may specifically include a first preview region 31, a second preview region 32 and a third preview region 33. The first preview region 31 displays the preview content 34 of the live streaming content, the second preview region 32 displays the resource description information 35 corresponding to the second target object associated with the live streaming content, and the third preview region 33 displays the predetermined trigger icon 36. The first preview region 31 may be located in the middle of the live streaming content preview interface 31, the second preview region 32 may be located at the lower left corner of the live streaming content preview interface 31, and the third preview region 33 may be located at the lower right corner of the live streaming content preview interface 31. The first preview region 31, the second preview region 32, and the third preview region 33 are at least partially non-overlapped.

According to the method for displaying live streaming content provided by the embodiment, the live streaming content preview interface may include a first preview region, a second preview region and a third preview region. A preview content of a live streaming content is displayed in a first preview region in a live streaming content preview interface, resource description information corresponding to a second target object associated with the live streaming content is displayed in a second preview region of the live streaming content preview interface, and a predetermined trigger icon is displayed in a third preview region in a live streaming content preview interface. Thereby, the selection difficulty for preview content in each preview region may be reduced, and a user can rapidly trigger any icon via a control terminal or a gesture, and thus the user experience can be improved.

Furthermore, on the basis of any of the above embodiments, Step 102 comprises: in response to a trigger operation of a user on the live streaming content preview interface, jumping to the live session interface; or in response to a display duration of the live streaming content preview interface reaching a predetermined duration, jumping to the live session interface.

In this embodiment, when the live streaming content preview interface is displayed, a page jump request triggered by the user may be acquired, and it may jump to the live session interface according to the page jump request. The page jump request may be initiated in response to a predetermined operation of the user on the live streaming content preview interface, or may be initiated in response to the display duration of the live streaming content preview interface reaching a predetermined duration, that is, the user does not trigger any operation on the live streaming content preview interface within the predetermined duration. Alternatively, the page jump request may also be a request initiated by the user in any control manner such as a control terminal, which is not limited in the present disclosure.

The method for displaying live streaming content provided in the present embodiment may jump to a live session interface when a trigger operation of a user is acquired or a display duration of a live streaming content preview interface reaches a predetermined duration, thereby improving an interaction manner in a live streaming scenario, and further improving user experience.

Furthermore, on the basis of any of the above embodiments, in response to the trigger operation of the user on the live streaming content preview interface, jumping to the live session interface comprises: in response to the user triggering the trigger icon, jumping to the live session interface, predetermined prompt information being displayed on the trigger icon, and the prompt information prompting the user to trigger the trigger icon to enter the live session interface; or in response to the user triggering the resource description information corresponding to the second target object, jumping to the live session interface; or in response to the user triggering a picture of the preview content of the live streaming content, jumping to the live session interface.

In this embodiment, a trigger icon is preset in the third preview region of the live streaming content preview interface. The trigger icon is configured to, in response to a trigger operation of a user on the trigger icon, jump to a live session interface, so as to realize the viewing of live streaming content. A predetermined prompt information is displayed on the trigger icon, and the prompt information is used for prompting the user to trigger the trigger icon to enter the live session interface. Specifically, the prompt information may be "press the OK key to enter the live session".

Alternatively, it may be detected whether the user performs a trigger operation on the trigger icon. If yes, it may jump to the live session interface based on the trigger operation performed by the user on the trigger icon. Alternatively, a time period may be predetermined, and if it is detected that the user performs a trigger operation on the trigger icon within the predetermined time period, it may jump to the live session interface based on the trigger operation performed by the user on the trigger icon. If the live streaming content preview interface remains to be displayed within the predetermined time period and the user does not perform a trigger operation on the trigger icon, it may automatically jump to the live session interface. The predetermined time period may specifically be Os to 7s, and may also be another time range set by the user on demand, which is not limited in the present disclosure. Furthermore, prior to automatically jumping to the live session interface, prompt information of the page automatic jumping may also be displayed on the live streaming content preview interface, so as to prompt the user that the page is about to automatically jump, thereby facilitating the interactive operation of the user.

FIG. 4 is a schematic diagram of further interface interaction according to an embodiment of the present disclosure. As shown in FIG. 4, when a live streaming content preview interface 41 is currently displayed in a display interface, if a triggering operation performed by a user on a predetermined trigger icon 42 in the live streaming content preview interface 41 is detected, it may jump to the live session interface 43. The live session interface 43 specifically comprises a first display region 44 and a second display region 45. Live streaming content 46 is displayed in the first display region 44, and information 47 associated with a plurality of first target objects associated with the live streaming content is displayed in the second display region 45. The first display region 44 may be located at a middle position of the live session interface 43, and the second display region 45 may be located at a lower side of the live session interface 43 and at least partially non-overlapped with the first display region 44.

Optionally, in a television terminal scenario, in a case where the remote control terminal is not near the user at the moment, if the user is interested in the live streaming content displayed on the live streaming content preview interface, the trigger icon cannot be quickly triggered. In this case, in order to meet an actual need of the user, a second time period may be predetermined, and the time period may be longer than the first time period. For example, the second time period may be Os to 12s, and may also be another time range that is set by the user on demand, which is not limited in the present disclosure.

If it is detected that the user does not trigger the trigger icon within the second predetermined time period, the user may be interested in the currently played live streaming content, but cannot automatically trigger entering the live session interface. At this point, it may automatically jump to the live session interface.

By jumping to the live session interface in response to detecting that the user does not triggering the trigger icon within the predetermined second time period, the interface jumping may be achieved when the user cannot touch the remote control terminal or cannot perform a trigger operation on the terminal device. Thereby, the user experience can be improved.

Optionally, the second preview region of the live streaming content preview interface may display resource description information corresponding to the second target object associated with the live streaming content. Taking the live streaming content being live streaming content of merchandise as an example, the resource description information includes but is not limited to content such as discount information and/or coupon information of the merchandise. If the user is interested in the resource description information, a trigger operation may be performed on the resource description information. Accordingly, in response to a user's trigger operation on the resource description information, it may jump to the live session interface, so that the user can know more about the resource description information in the live session interface.

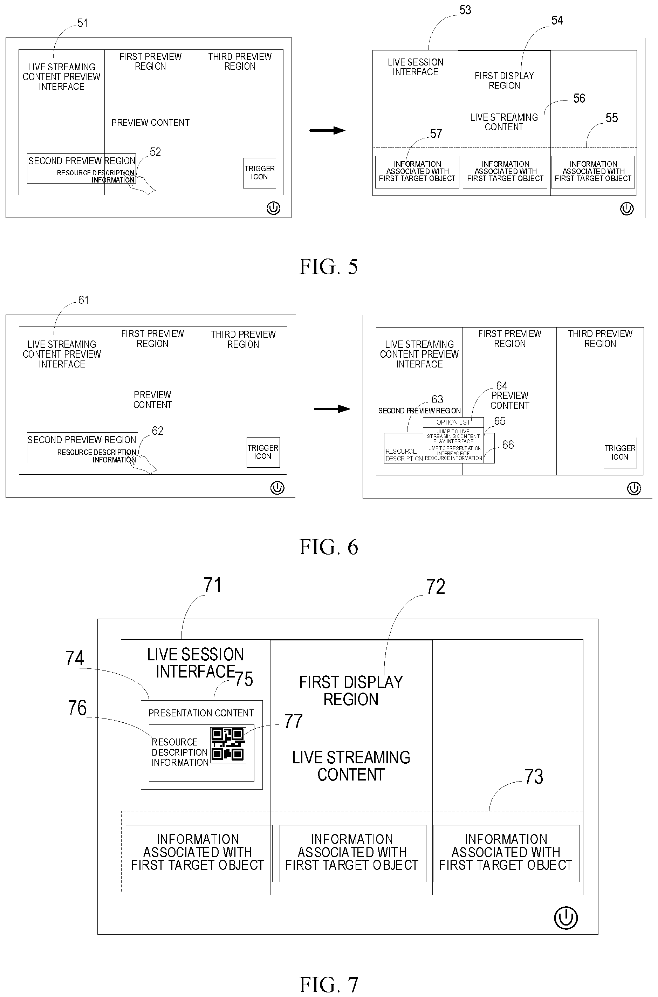

FIG. 5 is a schematic diagram of further interface interaction according to an embodiment of the present disclosure. As shown in FIG. 5, when a live streaming content preview interface 51 is currently displayed in a display interface, if it is detected that a user's trigger operation is performed on resource description information 52 corresponding to any predetermined first target object on the live streaming content preview interface 51, it may jump to the live session interface 53. The live session interface 53 specifically comprises a first display region 54 and a second display region 55. Live streaming content 56 is displayed in the first display region 54, and information 57 associated with a plurality of first target objects associated with the live streaming content is displayed in the second display region 55. The first display region 54 may be located at a middle position of the live session interface 53. The second display region 55 may be located at a lower side of the live session interface 53, and at least partially does not overlap with the first display region 54.

Furthermore, on the basis of any one of the above-mentioned embodiments, after displaying, in the second preview region of the live streaming content preview interface, the resource description information corresponding to the second target object associated with the live streaming content, the method further includes: in response to the user triggering the resource description information corresponding to the second target object within a predetermined first time period, jumping to a presentation interface of the resource description information.

Optionally, resource description information corresponding to any of the plurality of first target objects associated with the live streaming content may be displayed in the second preview region of the live streaming content preview interface. Taking the live streaming content being live streaming content of merchandise as an example, the resource description information includes but is not limited to content such as discount information and/or coupon information of the merchandise. If the user is interested in the resource description information, a trigger operation may be performed on the resource description information. Correspondingly, in response to the user's trigger operation on the resource description information, it may jump to a presentation interface corresponding to the resource description information, and details of the resource description information is presented in the presentation interface. In this way, the user can know more about the resource description information in the presentation interface corresponding to the resource description information.

Optionally, on the basis of any one of the above-mentioned embodiments, after displaying, in a second preview region of the live streaming content preview interface, resource description information corresponding to a second target object associated with the live streaming content, the method further includes: in response to a user triggering the resource description information corresponding to the second target object within a predetermined first time period, displaying an option list in the second preview region, wherein the option list comprises jumping to the live session interface and jumping to a presentation interface of the resource description information; and performing an interface jumping operation based on a selection operation of the user in the option list.

In this embodiment, after detecting the trigger operation performed by the user on the resource description information corresponding to the second target object, an option list may be displayed in the second preview region. The option list includes jumping to the live session interface and jumping to a presentation interface of the resource description information. Thereby, the user may select an option in the option list on demand. Furthermore, an interface jump operation is performed in response to a selection operation of the user in the option list.

For example, if the user chooses to jump to the live session interface, the live streaming content preview interface may jump to the live session interface according to the selection operation of the user, so as to watch the live streaming content. Alternatively, if the user selects to jump to the presentation interface of the resource description information, the live streaming content preview interface may jump to the presentation interface of the resource description information according to the selection operation of the user, so as to view the detail information of the resource description information.

FIG. 6 is a schematic diagram of further interface interaction according to an embodiment of the present disclosure. As shown in FIG. 6, when the live streaming content preview interface 61 is currently displayed in the display interface, if a triggering operation of the user on the resource description information 62 corresponding to any of predetermined first target objects on the live streaming content preview interface 61 is detected, an option list 64 may be displayed in the second preview region 63 of the live streaming content preview interface 61. The option list 64 includes jump to the live session interface 65 and jump to a presentation interface of the resource description information 66.

Optionally, it may be detected whether the user performs a trigger operation on a picture of the preview content of the live streaming content, and if so, it may jump to the live session interface in response to the trigger operation.

According to the method for displaying live streaming content provided in the present embodiment, a trigger icon, preview content of the live streaming content and resource description information are displayed in the live streaming content preview interface, respectively, so that a jump operation from the live streaming content preview interface to the live session interface may be realized. This facilitates a trigger operation of a user on display content, enables the user to view live streaming content, and improves the user experience.

Furthermore, on the basis of any one of the above-mentioned embodiments, before Step 101, the method further includes: in response to a user switching media content currently played on a media content play interface, displaying the live streaming content preview interface.

In this embodiment, in order to enable a user to know more about the live streaming content, when the user performs a switching operation on media content in a media content play interface, a live streaming content preview interface may be displayed. The media content includes but is not limited to video content, text content, picture content, etc. published by any user. Thereby, the user can know the live streaming content in advance through the live streaming content preview interface, and then view the live streaming content based on the resource description information and live streaming content displayed in the live streaming content preview interface.

By displaying the live streaming content preview interface in response to a switching operation on media content currently played in a media content play interface, a user can have a quick view of the live streaming content when browsing the media content. Thereby, the interestingness and diversity of media content browsed by the user can be improved.

Optionally, on the basis of any one of the above-mentioned embodiments, before Step 101, the method further includes: in response to a user searching any of the plurality of first target objects in a search interface, displaying a search result page, wherein the search result page comprises a live streaming content search result associated with the any of the plurality of first target objects; and in response to the user triggering the live streaming content search result, displaying the live streaming content preview interface.

In this embodiment, a search interface may be provided for a user in advance, and the user may search the first target object in the search interface on demand. Accordingly, in response to the user searching any one of the first target objects, a search result page may be displayed. The search result page comprises a live streaming content search result(s) associated with any one of the first target objects, and the live streaming content search result at least comprises one piece of live streaming content.

Accordingly, in response to the user triggering a live streaming content search result, the live streaming content preview interface may be displayed. Thereby, the user can know the live streaming content in advance through the live streaming content preview interface, and view the live streaming content based on the resource description information and the live streaming content displayed in the live streaming content preview interface.

By providing different display modes of the live streaming content preview interface, the interactive mode in an e-commerce scenario can be further improved.

Furthermore, on the basis of any one of the above-mentioned embodiments, the live session interface further includes a third display region, and after Step 101, the method further includes: displaying, in the third display region, resource description information and resource transfer channel information corresponding to a third target object, wherein the third target object is an object that is currently being talked about in the live session.

In this embodiment, the live session interface further includes a third display region. After jumping to the live session interface, resource description information and resource transfer channel information corresponding to the third target object may be further displayed in the third display region, so that the user can further learn about the third target object associated with the live streaming content based on the presentation content.

The presentation content may specifically comprise resource description information corresponding to the third target object and resource transfer channel information corresponding to the third target object. The resource transfer channel information may specifically be quick response (QR) code information. After a user scans the resource transfer channel information, it may jump to a resource transfer channel corresponding to the third target object. The user may further know the third target object based on the resource description information. When the user is interested in the third target object, jumping to a detail page of the third target object may be realized in aid of the resource transfer channel information, so that details of the third target object can be viewed on the detail page. The third target object may be an object that is currently being introduced in the live session.

It should be noted that, the third display region may not overlap with the first display region, so that the user can perform a quick selection operation on the content of interest by using a control manner such as a control terminal or a gesture, thereby improving user experience. Optionally, the third region may also be overlaid on the first display region, and overlap with the first display region. The present disclosure is not limited in this respect.

For example, the third display region may be disposed at a left side of the live session interface, while the first display region may be disposed at a middle position of the live session interface, and the second display region may be disposed at a lower side of the live session interface.

FIG. 7 is a schematic diagram of a further display interface according to an embodiment of the present disclosure. As shown in FIG. 7, the live session interface 71 includes a first display region 72, a second display region 73 and a third display region 74. The first display region 72 is used for displaying live streaming content, and the second display region 73 is used for displaying information associated with a plurality of first target objects associated with the live streaming content. The plurality of first target objects may be displayed in a manner of a merchandise list. The third display region 74 is used to display presentation content 75 corresponding to the third target object. The presentation content of the third target object may also be displayed in a manner of an information card. The presentation content 75 includes resource description information 76 corresponding to the third target object and resource transfer channel information 77 corresponding to a detail page of the third target object.

A third display region is provided, and resource description information and resource transfer channel information corresponding to a third target object are displayed in the third display region, so that a user can know a third target object that is currently being introduced on the live session interface. Thereby, an interaction procedure is simplified, and the user experience is improved.

Optionally, on the basis of any one of the above-mentioned embodiments, the live session interface further includes a third display region, and the live session interface further includes a fourth display region. After in response to a predetermined operation of a user on the live streaming content preview interface, jumping to the live session interface, the method further comprises: displaying, in the third display region, resource description information corresponding to a third target object, and displaying, in the fourth display region, resource transfer channel information corresponding to the third target object, wherein the third target object is an object that is currently being talked about in the live session.

In this embodiment, the live session interface may further include a third display region and a fourth display region. After jumping to the live session interface, resource description information corresponding to the third target object may be further displayed in the third display region, and the resource transfer channel information corresponding to a detail page of the third target object may be displayed in the fourth display region. The resource transfer channel information may include entry information for purchasing merchandise, and may specifically be QR code information. After the user scans the resource transfer channel information, it may jump to the resource transfer channel corresponding to the third target object. The user may further learn about the third target object according to the resource description information. When the user is interested in the third target object, jumping to the detail page of the third target object may be realized in aid of the resource transfer channel information, so that details of the third target object may be viewed on the detail page. In a case where the live video is a video in a portrait orientation, the third display region and the fourth display region may be located at two sides of a picture of live streaming video in the live session interface, respectively, thereby avoiding affecting the user's experience of watching the live stream.

It should be noted that, the third display region and the fourth display region may not overlap with each other, and the third display region and the fourth display region may be at least partially non-overlapped with the first display region. In this way, a user can quickly select content of interest by using a control manner such as a control terminal or a gesture, and thus user experience is improved.

Taking a practical application as an example, the third display region may be disposed at a left side of the live session interface, the fourth display region may be disposed at a right side of the live session interface, while the first display region may be disposed at a middle position of the live session interface, and the second display region may be disposed at a lower side of the live session interface.

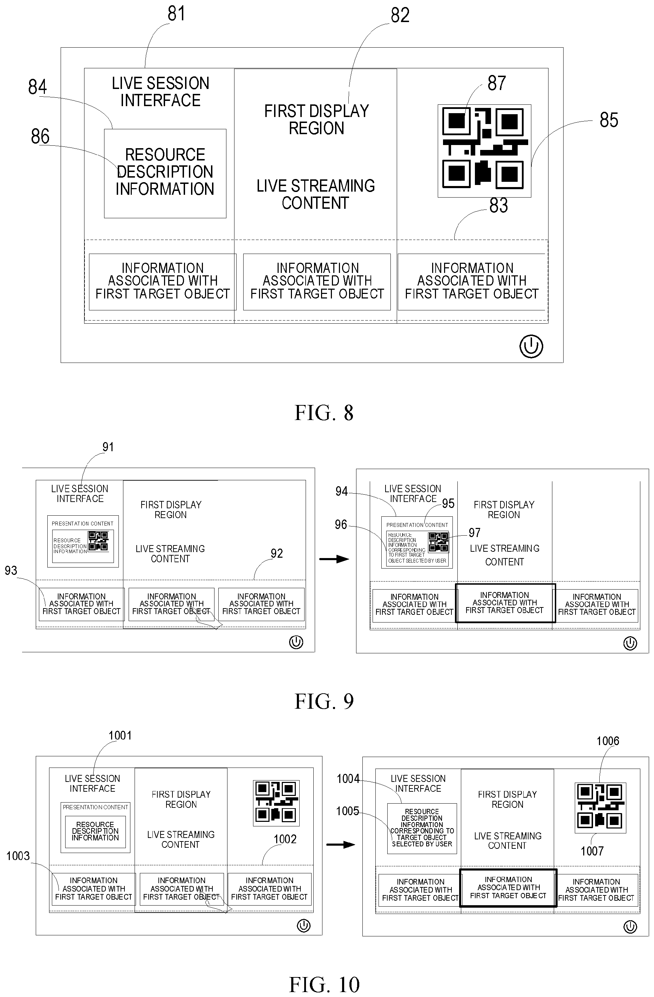

FIG. 8 is a schematic diagram of a further display interface according to an embodiment of the present disclosure. As shown in FIG. 8, the live session interface 81 includes a first display region 82, a second display region 83, a third display region 84, and a fourth display region 85. The first display region 82 is configured to display live streaming content, and the second display region 83 is configured to display information associated with a plurality of first target objects associated with the live streaming content. The third display region 84 is configured to display the resource description information 86 corresponding to the third target object, and the fourth display region 85 is configured to display the resource transfer channel information 87 corresponding to a detail page of the third target object.

It should be noted that the second target object may specifically be one of the plurality of first target objects. Preferably, the second target object may also be an object currently being introduced in the live session. Specifically, in order to enable the user to more intuitively learn about the second target object that is previewed on the live streaming content preview interface, after entering the live session interface from the live streaming content preview interface, the third target object currently displayed on the live session interface may be controlled to be the same as the second target object.

The information associated with the second target object is highlighted among the information associated with the plurality of first objects.

In this embodiment, in order to enable the user to more intuitively learn about the second target object displayed in the live streaming content preview interface, the second target object in the second display region may be highlighted. Specifically, the information associated with the second target object may be zoomed in, highlighted, and so on, so that the information associated with the second target object may be distinguished from a further first target object(s) in the second display region.

Optionally, the second target object and the third target object may also be different from content currently being talked about in the live session. Specifically, the second target object currently displayed in the live streaming content preview interface may be any predetermined target object, and may be different from an object that is currently being commented in the live session. In order to enable the user to more intuitively learn about the second target object currently displayed in the live streaming content preview interface, after the user enters the live session interface via the live streaming content preview interface, the third target object displayed in the live session interface may be the same as the second target object.

A third display region and a fourth display region are set, and resource description information corresponding to a third target object is displayed in the third display region, and the resource transfer channel information corresponding to the third target object is displayed in the fourth display region. Thereby, at the live session interface, the user can better know the third target object currently being talked about. Therefore, the interaction procedure is simplified, and the user experience is improved.

Furthermore, on the basis of any one of the above-mentioned embodiments, after Step 102, the method further includes: in response to the user switching the information associated with the plurality of first target objects, updating information associated with the plurality of first target objects that is currently displayed in the second display region.

In this embodiment, because the number of the first target objects associated with the live streaming content may be more than one, the second display region may not be able to display all of the first target objects. Therefore, when the user wants to view more first target objects, the content displayed in the second display region may be switched.

Correspondingly, in response to the user switching the information associated with the plurality of first target objects, the information associated with the plurality of first target objects that is currently displayed in the second display region may be updated, so that more first target objects can be displayed in the second display region for the user to view.

By updating the currently displayed information associated with the plurality of first target objects according to the switching operation of the user, the currently displayed information associated with the plurality of first target objects may can stratify the actual need of the user.

Furthermore, on the basis of any one of the above-mentioned embodiments, after Step 102, the method further includes: in response to a user selecting the information associated with the plurality of first target objects, determining a first target object currently selected by the user; and displaying, in the third display region, presentation content corresponding to the currently selected first target object, the presentation content comprising resource description information corresponding to the first target object and resource transfer channel information corresponding to a detail page of the first target object; or displaying, in the third display region, resource description information corresponding to the currently selected first target object, and displaying, in the fourth display region, resource transfer channel information corresponding to a detail page of the currently selected first target object.

In this embodiment, in order to enable the user to further learn about the first target object, the user may further select information associated with the plurality of first target objects in the second display region. Accordingly, in response to the user selecting information associated with the plurality of first target objects, a first target object that is currently selected by the user is determined, and presentation content corresponding to the currently selected first target object is displayed in the third display region. The presentation content includes resource description information corresponding to the first target object and resource transfer channel information corresponding to the detail page of the first target object.

FIG. 9 is a schematic diagram of further interface interaction according to an embodiment of the present disclosure. As shown in FIG. 9, a user may select information 93 associated with the plurality of first target objects displayed in the second display region 92 of the live session interface 91. In response to the user selecting the information 93 associated with any one of the first target objects, presentation content 95 corresponding to the currently selected first target object may be displayed in the third display region 94. The presentation content 95 includes resource description information 96 corresponding to the first target object and resource transfer channel information 97 corresponding to a detail page of the first target object.

Alternatively, in response to the user selecting information associated with the plurality of first target objects, a first target object currently selected by the user is determined. Resource description information corresponding to the first target object currently selected may be displayed in a third display region, and resource transfer channel information corresponding to a detail page of the first target object currently selected may be displayed in a fourth display region.

FIG. 10 is a schematic diagram of further interface interaction according to an embodiment of the present disclosure. As shown in FIG. 10, a user may select information 1003 associated with a plurality of first target objects displayed in a second display region 1002 in a live session interface 1001. In response to the user selecting the information 1003 associated with any one of the first target objects, the resource description information 1005 corresponding to the currently selected first target object may be displayed in the third display region 1004, and the resource transfer channel information 1007 corresponding to a detail page of the currently selected first target object may be displayed in a fourth display region 1006.

It should be noted that any one of the foregoing triggering operations may be initiated by a user through a remote control terminal, and/or the triggering operation is initiated by a user through a predetermined gesture.

The method for displaying live streaming content provided in the present embodiment updates currently displayed resource description information and resource transfer channel information based on a selection operation(s) of a user, so that the currently displayed resource description information and resource transfer channel information can be kept synchronous with a first target object selected by the user. Thereby, the user can quickly and accurately learn more about the first target object, or further perform a further operation(s).

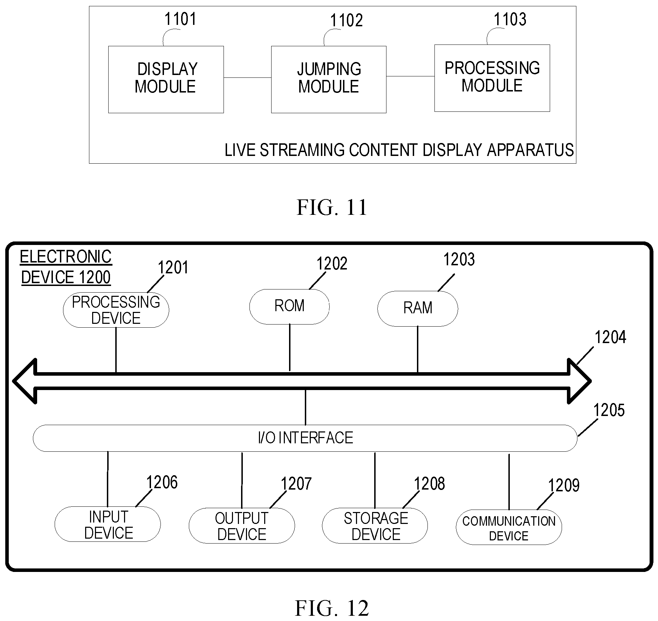

FIG. 11 is a schematic structural diagram of a live streaming content display apparatus according to an embodiment of the present disclosure. As shown in FIG. 11, the apparatus includes a display module 1101, a jumping module 1102 and a processing module 1103. The display module 1101 is configured for displaying a live streaming content preview interface. The jumping module 1102 is configured for: in response to a page jump request, jumping to a live session interface. The processing module 1103 is configured for displaying live streaming content in a first display region of the live session interface, and displaying, in a second display region of the live session interface, information associated with a plurality of first target objects that are associated with the live streaming content.

Furthermore, on the basis of any of the above embodiments, the apparatus further comprises a display module configured for: displaying preview content of the live streaming content in a first preview region of the live streaming content preview interface; displaying, in a second preview region of the live streaming content preview interface, resource description information corresponding to a second target object associated with the live streaming content; and displaying a predetermined trigger icon in a third preview region of the live streaming content preview interface.

Furthermore, on the basis of any of the above embodiments, the jumping module is configured for: in response to a trigger operation of a user on the live streaming content preview interface, jumping to the live session interface; or in response to a display duration of the live streaming content preview interface reaching a predetermined duration, jumping to the live session interface.

Furthermore, on the basis of any of the above embodiments, the jumping module is configured for: in response to the user triggering the trigger icon, jumping to the live session interface, predetermined prompt information being displayed on the trigger icon, and the prompt information prompting the user to trigger the trigger icon to enter the live session interface; or in response to the user triggering the resource description information corresponding to the second target object, jumping to the live session interface; or in response to the user triggering a picture of the preview content of the live streaming content, jumping to the live session interface.

Furthermore, on the basis of any of the above-mentioned embodiments, the apparatus further comprises a jumping module configured for: in response to a user triggering resource description information corresponding to any one of the plurality of first target objects within a predetermined first time period, jumping to a presentation interface of the resource description information.

Furthermore, on the basis of any of the above-mentioned embodiments, the apparatus further comprises a trigger module and a jumping module. The trigger module is configured for: in response to a user triggering resource description information corresponding to any of the plurality of first target objects within a predetermined first time period, displaying an option list in the second preview region, wherein the option list comprises jumping to the live session interface and jumping to a presentation interface of the resource description information. The jumping module is configured for performing an interface jumping based on a selection operation of the user in the option list.

Furthermore, on the basis of any of the above embodiments, the apparatus further comprises a display module configured for: in response to a user switching media content currently played on a media content play interface, displaying the live streaming content preview interface.

Furthermore, on the basis of any of the described embodiments, the apparatus further comprises a search module and a display module. The search module is configured for: in response to the user searching any of the plurality of first target objects in a search interface, displaying a search result page, wherein the search result page comprises a live streaming content search result associated with the any of the plurality of first target objects. The display module is configured for: in response to the user triggering the live streaming content search result, displaying the live streaming content preview interface.

Furthermore, on the basis of any one of the above-mentioned embodiments, the live session interface further includes a third display region. The apparatus further comprises a display module configured for displaying, in the third display region, resource description information and resource transfer channel information corresponding to a third target object, wherein the third target object is an object that is currently being talked about in the live session.

Furthermore, on the basis of any one of the above-mentioned embodiments, the live session interface further includes a third display region. The live session interface further comprises a fourth display region. The apparatus further comprises a display module configured for displaying, in the third display region, resource description information corresponding to a third target object, and displaying, in the fourth display region, resource transfer channel information corresponding to the third target object, wherein the third target object is an object that is currently being talked about in the live session.

Furthermore, on the basis of any one of the above-mentioned embodiments, the second target object is one of the plurality of first target objects, and the second target object is an object that is currently being talked about in the live session; and information associated with the second target object is highlighted among the information associated with the plurality of first objects.

Furthermore, on the basis of any of the described embodiments, the apparatus further comprises a switching module configured for: in response to a user switching the information associated with the plurality of first target objects, updating information associated with the plurality of first target objects that is currently displayed in the second display region.

Furthermore, on the basis of any of the described embodiments, the apparatus further comprises a determination module and a display module. The determination module is configured for: in response to a user selecting the information associated with the plurality of first target objects, determining a first target object currently selected by the user. The display module is configured for: displaying, in the third display region, presentation content corresponding to the currently selected first target object, the presentation content comprising resource description information corresponding to the first target object and resource transfer channel information corresponding to a detail page of the first target object; or displaying, in the third display region, resource description information corresponding to the currently selected first target object, and displaying, in the fourth display region, resource transfer channel information corresponding to a detail page of the currently selected first target object.

Furthermore, based on any one of the above-mentioned embodiments, the trigger operation is initiated by the user through a remote control terminal, and/or the triggering operation is initiated by the user through a predetermined gesture.

The apparatus provided in this embodiment may be used to execute the technical solutions of the foregoing method embodiments, and implementation principles and technical effects of the apparatus are similar to the foregoing method embodiments, and thus are not repeatedly described herein for this embodiment.

In order to achieve the described embodiments, the embodiments of the present disclosure further provide an electronic device comprising a processor and a memory. The memory stores computer executable instructions, and the processor executes the computer executable instructions stored in the memory, so that the processor executes a method for displaying live streaming content in accordance with any one of the above-mentioned embodiments.

FIG. 12 is a schematic structural diagram of an electronic device according to an embodiment of the present disclosure. As shown in FIG. 12, the electronic device 1200 may be a terminal device or a server. The terminal device may include, but is not limited to, a mobile terminal such as a mobile phone, a laptop computer, a digital broadcast receiver, a personal digital assistant (PDA), a portable android device (PAD), a portable media player (PMP), a vehicle-mounted terminal (for example, a vehicle-mounted navigation terminal), and the like, and a fixed terminal such as a digital TV, a desktop computer, and the like. The electronic device shown in FIG. 12 is merely an example and should not cast any limitation to the functions and scope of use of the embodiments of the present disclosure.

As shown in FIG. 12, the electronic device 1200 may include a processing device (e.g., a central processing unit, a graphics processing unit, etc.) 1201 that may perform various suitable actions and processes in accordance with a program stored in a read only memory (ROM) 1202 or a program loaded into a random access memory (RAM) 1203 from a storage device 1208. Various programs and data required for the operation of the electronic device 1200 are also stored in the RAM 1203. The processing device 1201, the ROM 1202, and the RAM 1203 are connected to each other via a bus 1204. An input/output (I/O) interface 1205 is also connected to the bus 1204.

In general, the following devices may be connected to the I/O interface 1205: an input device 1206 including, for example, a touchscreen, a touchpad, a keyboard, a mouse, a camera, a microphone, an accelerometer, a gyroscope, or the like; an output device 1207 including, for example, a liquid crystal display (LCD), a speaker, a vibrator, or the like; a storage device 1208 including, for example, a magnetic tape, a hard disk, or the like; and a communication device 1209. The communication device 1209 may enable the electronic device 1200 to wirelessly or wired communicate with other devices so as to exchange data. Although FIG. 12 shows the electronic device 1200 comprising various devices, it should be understood that it is not required that all of the devices shown in the figure shall be implemented or equipped. More or fewer devices may be alternatively implemented or equipped.

In particular, in accordance with embodiments of the present disclosure, the processes described above with reference to the flowcharts may be implemented as a computer software program. For example, embodiments of the present disclosure include a computer program product comprising a computer program carried on a computer readable medium. The computer program comprises program code for executing the method as shown in the flowchart. In such an embodiment, the computer program may be downloaded and installed from the network via the communication device 909, or installed from storage device 908, or installed from ROM 902. When the computer program is executed by the processing device 901, the above-described functions defined in the method of embodiments of the present disclosure are executed.

Another embodiment of the present disclosure further provides a computer readable storage medium with computer executable instructions stored thereon. The computer executable instructions, when being executed by a processor, implement a method for displaying live streaming content in accordance with any one of the above-mentioned embodiments.

Another embodiment of the present disclosure further provides a computer program product comprising a computer program. The computer program, when being executed by a processor, implements a method for displaying live streaming content in accordance with any one of the above-mentioned embodiments.

Another embodiment of the present disclosure further provides a computer program. The computer program, when being executed by a processor, implements a method for displaying live streaming content in accordance with any one of the above-mentioned embodiments.

It should be noted that the computer readable medium in the present disclosure may be a computer readable signal medium or a computer readable storage medium, or any combination thereof. A computer-readable storage medium may be, for example, but not limited to, an electronic, magnetic, optical, electromagnetic, infrared, or semiconductor system, apparatus, or device, or any suitable combination thereof. More specific examples of the computer readable storage medium may include, but are not limited to, an electrical connection having one or more wires, a portable computer diskette, a hard disk, a random access memory (RAM), a read-only memory (ROM), an erasable programmable read-only memory (EPROM), a flash memory, an optical fiber, a compact disc read only memory (CD-ROM), an optical storage device, a magnetic storage device, or any suitable combination of the foregoing. In the present disclosure, a computer readable storage medium may be any tangible medium that may contain or store a program for use by or in connection with an instruction execution system, apparatus, or device. While in the present disclosure, a computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may also be any computer readable medium that is not a computer readable storage medium and that may communicate, propagate, or transport a program for use by or in connection with an instruction execution system, apparatus, or device. Program code embodied on a computer readable medium may be transmitted using any appropriate medium, including, but not limited to, wireline, optical fiber cable, Radio Frequency (RF), etc., or any suitable combination of the foregoing.

The computer readable medium may be included in the electronic device, or may exist separately and not be installed in the electronic device.

The computer readable medium carries one or more programs which when being executed by the electronic device, cause the electronic device to execute the method illustrated in the above-mentioned embodiments.

Computer program code for carrying out operations for aspects of the present disclosure may be written in any combination of one or more programming languages, including an object-oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, may be implemented by special purpose hardware-based systems that perform the specified functions or acts, or combinations of special purpose hardware and computer instructions.

The unit(s) involved in the embodiments of the present disclosure may be implemented through software or hardware. The name of a unit does not constitute a limitation to the unit itself in some cases, for example, the first acquisition unit may also be described as "unit to acquire at least two internet protocol addresses".

The functions described herein above may be performed, at least in part, by one or more hardware logic components. For example, without limitation, exemplary types of hardware logic components that may be used include Field-programmable Gate Arrays (FPGAs), Application Specific Integrated Circuits (ASICs), Application Specific Standard Products (ASSPs), System-on-chip systems (SOCs), Complex Programmable Logic Devices (CPLDs), etc.

In the context of this disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of machine-readable storage media would include an electrical connection based on one or more wires, a portable computer diskette, a hard disk, a random access memory (RAM), a read-only memory (ROM), an erasable programmable read-only memory (EPROM or Flash memory), an optical fiber, a compact disc read-only memory (CD-ROM), an optical storage device, a magnetic storage device, or any suitable combination of the foregoing.

In a first aspect, according to one or more embodiments of the present disclosure, a method for displaying live streaming content is provided, including: displaying a live streaming content preview interface; in response to a page jump request, jumping to a live session interface; and displaying live streaming content in a first display region of the live session interface, and displaying, in a second display region of the live session interface, information associated with a plurality of first target objects associated with the live streaming content.

According to one or more embodiments of the present disclosure, the method further comprises: displaying preview content of the live streaming content in a first preview region of the live streaming content preview interface; displaying, in a second preview region of the live streaming content preview interface, resource description information corresponding to a second target object associated with the live streaming content; and displaying a predetermined trigger icon in a third preview region of the live streaming content preview interface.

According to one or more embodiments of the present disclosure, in response to the page jump request, jumping to the live session interface comprises: in response to a trigger operation of a user on the live streaming content preview interface, jumping to the live session interface; or in response to a display duration of the live streaming content preview interface reaching a predetermined duration, jumping to the live session interface.

According to one or more embodiments of the present disclosure, in response to the trigger operation of the user on the live streaming content preview interface, jumping to the live session interface comprises: in response to the user triggering the trigger icon, jumping to the live session interface, predetermined prompt information being displayed on the trigger icon, and the prompt information prompting the user to trigger the trigger icon to enter the live session interface; or in response to the user triggering the resource description information corresponding to the second target object, jumping to the live session interface; or in response to the user triggering a picture of the preview content of the live streaming content, jumping to the live session interface.

According to one or more embodiments of the present disclosure, after displaying, in the second preview region of the live streaming content preview interface, the resource description information corresponding to any of the plurality of first target objects associated with the live streaming content, the method further includes: in response to a user triggering resource description information corresponding to any one of the plurality of first target objects within a predetermined first time period, jumping to a presentation interface of the resource description information.

According to one or more embodiments of the present disclosure, after displaying, in the second preview region of the live streaming content preview interface, the resource description information corresponding to any of the plurality of first target objects associated with the live streaming content, the method further includes: in response to a user triggering resource description information corresponding to any of the plurality of first target objects within a predetermined first time period, displaying an option list in the second preview region, wherein the option list comprises jumping to the live session interface and jumping to a presentation interface of the resource description information; and performing an interface jumping based on a selection operation of the user in the option list.

According to one or more embodiments of the present disclosure, before in response to a predetermined operation of the user on the live streaming content preview interface, jumping to the live session interface, the method further comprises: in response to a user switching media content currently played on a media content play interface, displaying the live streaming content preview interface.

According to one or more embodiments of the present disclosure, before in response to a predetermined operation of the user on the live streaming content preview interface, jumping to the live session interface, the method further comprises: in response to the user searching any of the plurality of first target objects in a search interface, displaying a search result page, wherein the search result page comprises a live streaming content search result associated with the any of the plurality of first target objects; and in response to the user triggering the live streaming content search result, displaying the live streaming content preview interface.

According to one or more embodiments of the present disclosure, the live session interface further comprises a third display region, and the method further comprises: displaying, in the third display region, resource description information and resource transfer channel information corresponding to a third target object, wherein the third target object is an object that is currently being talked about in the live session.

According to one or more embodiments of the present disclosure, the live session interface further comprises a third display region; the live session interface further comprises a fourth display region, and the method further comprises: displaying, in the third display region, resource description information corresponding to a third target object, and displaying, in the fourth display region, resource transfer channel information corresponding to the third target object, wherein the third target object is an object that is currently being talked about in the live session.

According to one or more embodiments of the present disclosure, the second target object is one of the plurality of first target objects, and the second target object is an object that is currently being talked about in the live session; and information associated with the second target object is highlighted among the information associated with the plurality of first objects.

According to one or more embodiments of the present disclosure, after displaying, in the second display region of the live session interface, the information associated with the plurality of first target objects associated with the live streaming content, the method further includes: in response to the user switching the information associated with the plurality of first target objects, updating information associated with the plurality of first target objects that is currently displayed in the second display region.

According to one or more embodiments of the present disclosure, after displaying the live streaming content in the first display region of the live session interface, and displaying, in the second display region of the live session interface, the information associated with the plurality of first target objects that are associated with the live streaming content, the method further comprises: in response to a user selecting the information associated with the plurality of first target objects, determining a first target object currently selected by the user; and displaying, in the third display region, presentation content corresponding to the currently selected first target object, the presentation content comprising resource description information corresponding to the first target object and resource transfer channel information corresponding to a detail page of the first target object; or displaying, in the third display region, resource description information corresponding to the currently selected first target object, and displaying, in the fourth display region, resource transfer channel information corresponding to a detail page of the currently selected first target object.

According to one or more embodiments of the present disclosure, the triggering operation is initiated by the user through a remote control terminal, and/or the triggering operation is initiated by the user through a predetermined hand gesture.

In a second aspect, according to one or more embodiments of the present disclosure, an apparatus for displaying live streaming content is provided, including: a display module configured for displaying a live streaming content preview interface; a jumping module configured for: in response to a page jump request, jumping to a live session interface; and a processing module configured for displaying live streaming content in a first display region of the live session interface, and displaying, in a second display region of the live session interface, information associated with a plurality of first target objects associated with the live streaming content.

According to one or more embodiments of the present disclosure, the apparatus further comprises a display module configured for: displaying preview content of the live streaming content in a first preview region of the live streaming content preview interface; displaying, in a second preview region of the live streaming content preview interface, resource description information corresponding to a second target object associated with the live streaming content; and displaying a predetermined trigger icon in a third preview region of the live streaming content preview interface.

According to one or more embodiments of the present disclosure, the jumping module is configured for: in response to a trigger operation of a user on the live streaming content preview interface, jumping to the live session interface; or in response to a display duration of the live streaming content preview interface reaching a predetermined duration, jumping to the live session interface.

According to one or more embodiments of the present disclosure, the jumping module is configured for: in response to the user triggering the trigger icon, jumping to the live session interface, predetermined prompt information being displayed on the trigger icon, and the prompt information prompting the user to trigger the trigger icon to enter the live session interface; or in response to the user triggering the resource description information corresponding to the second target object, jumping to the live session interface; or in response to the user triggering a picture of the preview content of the live streaming content, jumping to the live session interface.

According to one or more embodiments of the present disclosure, the apparatus further comprises a jumping module configured for: in response to a user triggering resource description information corresponding to any one of the plurality of first target objects within a predetermined first time period, jumping to a presentation interface of the resource description information.

According to one or more embodiments of the present disclosure, the apparatus further comprises a trigger module and a jumping module. The trigger module is configured for: in response to a user triggering resource description information corresponding to any of the plurality of first target objects within a predetermined first time period, displaying an option list in the second preview region, wherein the option list comprises jumping to the live session interface and jumping to a presentation interface of the resource description information. The jumping module is configured for performing an interface jumping based on a selection operation of the user in the option list.

According to one or more embodiments of the present disclosure, the apparatus further comprises a display module configured for: in response to a user switching media content currently played on a media content play interface, displaying the live streaming content preview interface.

According to one or more embodiments of the present disclosure, the apparatus further comprises a search module and a display module. The search module is configured for: in response to the user searching any of the plurality of first target objects in a search interface, displaying a search result page, wherein the search result page comprises a live streaming content search result associated with the any of the plurality of first target objects. The display module is configured for: in response to the user triggering the live streaming content search result, displaying the live streaming content preview interface.

According to one or more embodiments of the present disclosure, the live session interface further includes a third display region. The apparatus further comprises a display module configured for displaying, in the third display region, resource description information and resource transfer channel information corresponding to a third target object, wherein the third target object is an object that is currently being talked about in the live session.

According to one or more embodiments of the present disclosure, the live session interface further includes a third display region. The live session interface further comprises a fourth display region. The apparatus further comprises a display module configured for displaying, in the third display region, resource description information corresponding to a third target object, and displaying, in the fourth display region, resource transfer channel information corresponding to the third target object, wherein the third target object is an object that is currently being talked about in the live session.

According to one or more embodiments of the present disclosure, the second target object is one of the plurality of first target objects, and the second target object is an object that is currently being talked about in the live session; and information associated with the second target object is highlighted among the information associated with the plurality of first objects.

According to one or more embodiments of the present disclosure, the apparatus further comprises a switching module configured for: in response to a user switching the information associated with the plurality of first target objects, updating information associated with the plurality of first target objects that is currently displayed in the second display region.

According to one or more embodiments of the present disclosure, the apparatus further comprises a determination module and a display module. The determination module is configured for: in response to a user selecting the information associated with the plurality of first target objects, determining a first target object currently selected by the user. The display module is configured for: displaying, in the third display region, presentation content corresponding to the currently selected first target object, the presentation content comprising resource description information corresponding to the first target object and resource transfer channel information corresponding to a detail page of the first target object; or displaying, in the third display region, resource description information corresponding to the currently selected first target object, and displaying, in the fourth display region, resource transfer channel information corresponding to a detail page of the currently selected first target object.

According to one or more embodiments of the present disclosure, the trigger operation is initiated by the user through a remote control terminal, and/or the triggering operation is initiated by the user through a predetermined gesture.

According to a third aspect, according to one or more embodiments of the present disclosure, there is provided an electronic device comprising at least one processor and a memory. The memory stores computer executable instructions, and the at least one processor executes the computer executable instructions stored in the memory, so that the at least one processor executes a method for displaying live streaming content in accordance with the first aspect and various possible designs of the first aspect.

In a fourth aspect, according to one or more embodiments of the present disclosure, there is provided a computer readable storage medium with computer executable instructions stored thereon. The computer executable instructions, when being executed by a processor, implement a method for displaying live streaming content in accordance with the first aspect and various possible designs of the first aspect.

In a fifth aspect, according to one or more embodiments of the present disclosure, there is provided a computer program product comprising a computer program. The computer program, when being executed by a processor, implements a method for displaying live streaming content in accordance with the first aspect and various possible designs of the first aspect.

According to a sixth aspect, according to one or more embodiments of the present disclosure, there is provided a computer program. The computer program, when being executed by a processor, implements a method for displaying live streaming content in accordance with the first aspect and various possible designs of the first aspect.

The foregoing description is merely illustrative of the preferred embodiments of the present disclosure and of the technical principles applied thereto, as will be appreciated by those skilled in the art. The disclosure of the present disclosure is not limited to the technical solution formed by the specific combination of the described technical features. At the same time, it should also cover other technical solutions formed by any combination of the described technical features or equivalent features thereof without departing from the described disclosed concept. For example, the above features and technical features having similar functions disclosed in the present disclosure (but not limited thereto) are replaced with each other to form a technical solution.

In addition, while operations are depicted in a particular order, this should not be understood as requiring that the operations be performed in the particular order shown or in sequential order. Multitasking and parallel processing may be advantageous in certain circumstances. Likewise, while several specific implementation details are included in the above discussion, these should not be construed as limiting the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in language specific to structural features and/or methodological acts, it is to be understood that the subject matter defined in the appended claims is not necessarily limited to the specific features or acts described above. On the contrary, the specific features and acts described above are merely exemplary forms of implementing the claims.

## Claims

1. A method for displaying live streaming content, comprising:
displaying a live streaming content preview interface;
in response to a page jump request, jumping to a live session interface; and
displaying live streaming content in a first display region of the live session interface, and displaying, in a second display region of the live session interface, information associated with a plurality of first target objects associated with the live streaming content.

2. The method of claim 1, further comprising:
displaying preview content of the live streaming content in a first preview region of the live streaming content preview interface;
displaying, in a second preview region of the live streaming content preview interface, resource description information corresponding to a second target object associated with the live streaming content; and
displaying a predetermined trigger icon in a third preview region of the live streaming content preview interface.

3. The method of claim 2, wherein in response to the page jump request, jumping to the live session interface comprises:
in response to a trigger operation of a user on the live streaming content preview interface, jumping to the live session interface; or
in response to a display duration of the live streaming content preview interface reaching a predetermined duration, jumping to the live session interface.

4. The method of claim 3, wherein in response to the trigger operation of the user on the live streaming content preview interface, jumping to the live session interface comprises:
in response to the user triggering the trigger icon, jumping to the live session interface, predetermined prompt information being displayed on the trigger icon, and the prompt information prompting the user to trigger the trigger icon to enter the live session interface; or
in response to the user triggering the resource description information corresponding to the second target object, jumping to the live session interface; or
in response to the user triggering a picture of the preview content of the live streaming content, jumping to the live session interface.

5. The method of any of claims 1 to 4, wherein the live session interface further comprises a third display region, and the method further comprises:
displaying, in the third display region, resource description information and resource transfer channel information corresponding to a third target object, wherein the third target object is an object that is currently being talked about in the live session.

6. The method of any of claims 1 to 5, wherein the live session interface further comprises a third display region and a fourth display region, and the method further comprises:
displaying, in the third display region, resource description information corresponding to a third target object, and displaying, in the fourth display region, resource transfer channel information corresponding to the third target object, wherein the third target object is an object that is currently being talked about in the live session.

7. The method of claim 5 or 6, wherein,
the second target object is one of the plurality of first target objects, and the second target object is an object that is currently being talked about in the live session; and
information associated with the second target object is highlighted among the information associated with the plurality of first objects.

8. The method of claim 5 or 6, wherein after displaying the live streaming content in the first display region of the live session interface, and displaying, in the second display region of the live session interface, the information associated with the plurality of first target objects that are associated with the live streaming content, the method further comprises:
in response to a user selecting the information associated with the plurality of first target objects, determining a first target object currently selected by the user; and
displaying, in the third display region, resource description information and resource transfer channel information corresponding to the currently selected first target object; or displaying, in the third display region, resource description information corresponding to the currently selected first target object, and displaying, in the fourth display region, resource transfer channel information corresponding to a detail page of the currently selected first target object.

9. An apparatus for displaying live streaming content, comprising:
a display module configured for displaying a live streaming content preview interface;
a jumping module configured for: in response to a page jump request, jumping to a live session interface; and
a processing module configured for displaying live streaming content in a first display region of the live session interface, and displaying, in a second display region of the live session interface, information associated with a plurality of first target objects associated with the live streaming content.

10. An electronic device, comprising a processor and a memory,
wherein the memory stores computer executable instructions, and
the processor executes the computer executable instructions stored in the memory, so that the processor executes a method for displaying live streaming content in accordance with any of claims 1 to 8.

11. A computer readable storage medium with computer executable instructions stored thereon, wherein the computer executable instructions, when being executed by a processor, implement a method for displaying live streaming content in accordance with any of claims 1 to 8.

12. A computer program product comprising a computer program, wherein the computer program, when being executed by a processor, implements a method for displaying live streaming content in accordance with any of claims 1 to 8.

13. A computer program, wherein the computer program, when being executed by a processor, implements a method for displaying live streaming content in accordance with any of claims 1 to 8.
